# EUROPEAN PATENT APPLICATION

(11) **EP 4 610 328 A1**
(43) Date of publication of application: **03.09.2025**
(21) Application number: 23881960.1
(22) Date of filing: 27.10.2023
(51) Int. Cl.: C09K 8/584, C08G 65/26, C08G 65/28

(54) **WATER-LOCK RELEASING CHEMICAL AGENT FOR OIL AND GAS RESERVOIRS, PREPARATION METHOD THEREFOR AND USE THEREOF**

(30) Priority: 27.10.2022 CN 202211330937
(71) Applicant: China Petroleum & Chemical Corporation, Beijing 100728 (CN); Sinopec (Shangai) Research Institute of Petrochemical Technology Co., Ltd., Shanghai 201208 (CN)
(72) Inventor: MENG, Yong, Shanghai 201208 (CN); LI, Yingcheng, Shanghai 201208 (CN); ZHANG, Weidong, Shanghai 201208 (CN); JIN, Jun, Shanghai 201208 (CN); BAO, Xinning, Shanghai 201208 (CN); WU, Xinyue, Shanghai 201208 (CN); ZHANG, Li, Shanghai 201208 (CN); GUO, Rong, Shanghai 201208 (CN)
(74) Representative: karo IP
(86) International application number: PCT/CN2023/127093
(87) International publication number: WO 2024/088385

(57) **Abstract**

The present invention provides a water-lock releasing chemical agent for oil and gas reservoirs, preparation method therefor and use thereof. The water-lock releasing chemical agent for oil and gas reservoirs is prepared from raw materials comprising an anionic fluorosurfactant, a zwitterionic surfactant, a synergistic auxiliary and a solvent; based on 100% of the total weight of the water-lock releasing chemical agent for oil and gas reservoirs, the anionic fluorosurfactant comprises 1%-40%, the zwitterionic surfactant comprises 1%-40%, the synergistic auxiliary comprises 0.5%-20%, and the balance is the solvent. The components of the prepared water-lock releasing chemical agent interact with each other and enhance the synergy so as to greatly reduce the surface tension of water. The water-lock releasing chemical agent can adjust a matrix surface having a strongly water wettability to neutral wettability, and has lower apparent viscosity, lower cost and better stability.

## Description

### Technical Field

The invention relates to the fields of oil and gas reservoir exploitation and oil and gas reservoir stratum protection and stratum repair, and further to a water-lock releasing chemical agent for oil and gas reservoirs, preparation method therefor and use thereof.

### Background of Art

Water-lock damage is a ubiquitous problem in the development of oil and gas reservoirs. For example, during well drilling, well completion, well workover and exploitation operations, due to the introduction of a large amount of construction fluid, foreign fluids are often retained in porous media, which significantly reduces the reservoir permeability and the relative permeability of oil and gas. For another example, in the later stage of oil and gas reservoir development, as the production time increases, the production pressure difference of some high-pressure and low-yield wells will gradually increase, which causes the bound water in the peripheral formations of the reservoir to gradually flow into the near-well area, resulting in the water-lock. In addition, the concept of water-lock damage in oil and gas reservoirs can also be extended to liquid-lock damage. For example, in natural gas reservoirs, especially natural gas reservoirs containing condensate oil, the condensate oil continuously generated during the production process of the gas well gradually condenses and accumulates at the bottom of the natural gas well. When the water and condensate oil accumulated at the bottom of the well cannot be carried out of the wellhead with the gas flow, they will produce reverse imbibition into the capillary pores in the low-permeability formation, resulting in water-lock damage and condensate oil damage, which affect the gas well production capacity and both belong to the liquid-lock damage. Especially in low permeability oil and gas reservoirs, since the reservoirs generally have the characteristics of low porosity and low permeability, the flow channels of the fluid are narrow, the seepage resistance is large, and the interaction force between interfaces is large, which makes the water-lock damage and the liquid-lock damage particularly prominent.

Once the water-lock damage occurs, it will greatly affect the production capacity of oil and gas reservoirs. Therefore, how to prevent and eliminate the water-lock damage is one of the important issues to achieve stable and increased production of oil and gas fields.

There are two main reasons for the water-lock damage, including capillary self-imbibition and liquid phase retention, which are affected by the surface/interfacial tension of the fluid and the capillary wetting angle. The pore throat radius of the formation rock, the formation pressure, the invasion depth of the external fluid, the fluid viscosity and the like exacerbate the occurrence of the water-lock damage and the condensate oil damage. At present, the technical means to eliminate the water-lock damage in oil and gas reservoirs include physical means such as increasing production pressure, thermal cleaning, and formation fracturing, but the most important method to release the water-lock is to use a water-lock releasing chemical agent. The working principle of water-lock releasing chemical agent is to use surfactants and other agents to reduce the surface tension of water, regulate the wettability of the formation, and then promote the discharge of blocked water in the formation of oil and gas reservoirs, thereby achieving the effect of eliminate the water-lock damage. For natural gas reservoirs suffering from condensate oil damage, it is imperative that the corresponding water-lock releasing chemical agent possesses an excellent wettability regulation performance. This enables the treated formation matrix to approach neutral wettability, so as to achieve the effect of discharging the fluid that causes the damage in the formation.

The main idea of the existing water-lock releasing agent is to reduce the surface tension, and it pays less attention to the capabilities of regulating wettability (contact angle data) and reducing viscosity or has poor performance therein; the newly reported technologies include a new biosurfactant-containing water-lock releasing agent, which have high cost and poor performance stability. Therefore, it is necessary to develop a chemical agent suitable for releasing the water-lock in oil and gas reservoirs, which can be prepared with conventional surfactants, and possesses a reduced cost and an improved performance stability, and at the same time has properties such as low surface tension, good wettability (especially good wettability to water-lock damage and liquid-lock damage), and low viscosity.

### Summary of the Invention

In order to solve the technical problems existing in the prior art, the present invention provides a water-lock releasing chemical agent for oil and gas reservoirs, preparation method therefor and use thereof.

The water-lock releasing chemical agent provided by the present invention can reduce the surface tension of water, adjust a matrix surface having a strongly water wettability to neutral wettability, and at the same time have an effect of reducing fluid viscosity, and therefore can effectively eliminate the damage caused by water-lock and liquid-lock in oil and gas reservoirs.

The water-lock releasing chemical agent provided by the present invention combines two types of surfactants, so that the components can interact with each other and enhance the synergy. It can fully utilize the ultra-high surface activity of an anionic fluorosurfactant to significantly reduce the surface tension of the fluid. At the same time, the addition of a zwitterionic surfactant can further improve the efficiency of the two surfactants. When the anionic fluorosurfactant and the zwitterionic surfactant are used in a specific ratio in combination, the composite system arranges at the gas-liquid interface tighter than a single surfactant, which can greatly improve the surface and interface performance of the system and the wettability regulation ability, and promote the rational adsorption of the surfactant composition on the surface of the formation matrix through its charge characteristics, effectively exert its wettability regulation ability, create a low-energy surface of the matrix, promote the discharge of blocked water and oil in the formation, and play a good role in releasing the water-lock. In addition, a synergistic auxiliary is used as a water structure destroyer, and its addition can destroy the interaction between water molecules to a certain extent, so that the apparent viscosity of the whole system is further reduced, and the fluidity of the fluid causing damage is improved, and the water-lock releasing is further promoted. The addition of a small molecule solvent is not only to improve the solubility of the whole chemical agent system, but also to partially reduce the viscosity of the system.

One of the objects of the present invention is to provide a water-lock releasing chemical agent for oil and gas reservoirs.

The water-lock releasing chemical agent for oil and gas reservoirs is prepared from raw materials including an anionic fluorosurfactant, a zwitterionic surfactant, a synergistic auxiliary and a solvent;
the total weight of the water-lock releasing chemical agent for oil and gas reservoirs is 100%,
anionic fluorosurfactant: 1-40%; preferably 10-20%;
zwitterionic surfactant: 1-40%; preferably 10-30%;
synergistic auxiliary: 0.5-20%; preferably 5-10%;
preferably, the anionic fluorosurfactant is a non-perfluoroalkyl polyether anionic fluorosurfactant.

Herein, the non-perfluoroalkyl polyether anionic fluorosurfactant refers to a polyether anionic surfactant in which a chemical group containing fluorine atom(s) connected to the polyether moiety is not a perfluoroalkyl group. Preferably, in the non-perfluoroalkyl polyether anionic fluorosurfactant of the present invention, a perfluoroalkyl group is connected to the polyether moiety through a linking group rather than a bond (e.g. C₁₋₆ alkylene (such as -CH₂- and -CH₂CH₂-), -CO-, -NH-).

In a preferred embodiment of the present invention, the anionic fluorosurfactant is at least one of fluoroalkyl polyether acid salt, fluoroalkyl polyether acid ester, and fluoroalkyl polyether acid ester salt, preferably at least one of non-perfluoroalkyl polyether acid salt, non-perfluoroalkyl polyether acid ester, and non-perfluoroalkyl polyether acid ester salt.

Herein, the surfactant of non-perfluoroalkyl polyether acid salt, non-perfluoroalkyl polyether acid ester, and non-perfluoroalkyl polyether acid ester salt refers to such a polyether anionic surfactant, in which a chemical group connected to the polyether moiety is a chemical group containing fluorine atom(s), but it is not a perfluoroalkyl, another chemical group connected to the polyether moiety includes an acid group, the acid group can be in form of an acid salt, an acid ester, or an acid salt/acid ester; preferably, in the surfactant of non-perfluoroalkyl polyether acid salt, non-perfluoroalkyl polyether acid ester, and non-perfluoroalkyl polyether acid ester salt according to the present invention, a perfluoroalkyl group is connected to the polyether moiety through a linking group rather than a bond (e.g. C₁₋₆ alkylene (such as -CH₂- and -CH₂CH₂-), -CO-, -NH-).

Although the anionic fluorosurfactant can be directly purchased or prepared according to the preparation method disclosed in the prior art, the anionic fluorosurfactant is preferably a novel anionic fluorosurfactant having the following structure: 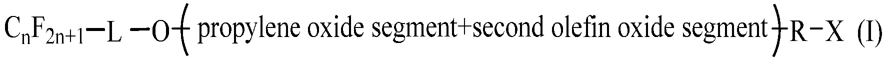 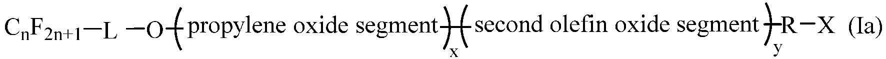 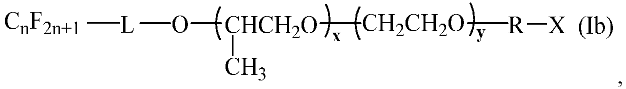 or 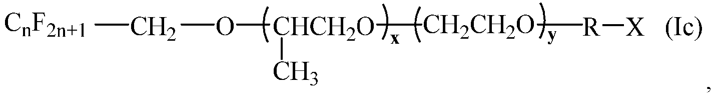 wherein,
the second olefin oxide segment is selected from ethylene oxide, butylene oxide and styrene oxide;
the total number of propylene oxide units in the propylene oxide segment is any integer of 1-40, preferably 2-20, more preferably 4-20, e.g. 8-20;
the total number of second olefin oxide units in the second olefin oxide segment is any integer of 0-40, preferably 2-20, more preferably 4-20, e.g. 8-20;
L is a linking group, for example C₁₋₆ alkylene (e.g. -CH₂- and -CH₂CH₂-), -CO-, -NH-; preferably, L is not a chemical bond;
R is at least one of C₁-C₂₀ alkylene and a substituted C₁-C₂₀ alkylene, preferably, R is at least one of C₁-C₆ alkylene and a substituted C₁-C₆ alkylene;
n is an integer of 1-20, preferably 4-12;
x is any integer of 0-40 (e.g. 1-41), preferably 2-20, for example 4-20, e.g. 8-20; preferably, x is not 0;
y is any integer of 0-40, preferably 2-20, for example 4-20, e.g. 8-20;
X is one of -COOM, -SO₃M, -OSO₃M, and -OPO₃M₂, preferably X is -COOM or -SO₃M, i.e., the anionic fluorosurfactant is preferably at least one of fluoroalkyl polyether acid salts; wherein M is a charge-balancing cation, and M is preferably an alkali metal cation, an alkaline earth metal cation or an ammonium cation, and more preferablyNa⁺, K⁺ or NH₄⁺.

Examples of the anionic fluorosurfactant of the present invention include:

C₁₀F₂₁CH₂O(PO)₁₀(EO)₁₆C₃H₆COONa;

C₄F₉CH₂O(PO)₈(EO)₈C₂H₄SO₃Na;

C₆F₁₃CH₂O(PO)₄(EO)₁₀CH₂OPO₃Na₂;

and

C₁₂F₂₅CH₂O(PO)₁₂(EO)₁₅CH₂COONa.

In the above general formula (I), "propylene oxide segment+second olefin oxide segment" refers to a segment consisting only of propylene oxide, or a segment consisting only of propylene oxide and one or more types of second olefin oxide, wherein in the latter case, the propylene oxide unit(s) and the second alkylene oxide unit(s) may be arranged regularly or irregularly.

In the above general formula (Ia), 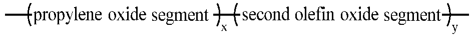 means that the propylene oxide segment is firstly connected to the perfluoroalkyl (CₙF₂ₙ₊₁) through -L-O-, and then the second olefin oxide segment is connected to the propylene oxide segment, and in the second olefin oxide segment, the second alkylene oxide units can be arranged regularly or irregularly.

In the present invention, based on the order from left to right, an ethylene oxide unit refers to -CH₂CH₂O-; a propylene oxide unit refers to -CH(CH₃)CH₂O-; a butylene oxide unit refers to -CH(ethyl)CH₂O-; and a styrene oxide unit refers to -CH(phenyl)CH₂O-. In the case where the olefin oxide units are connected to each other, the left end of an olefin oxide unit is connected to the right end of another olefin oxide unit, the left end of the leftmost olefin oxide unit in the olefin oxide segment is connected to the right end of CₙF₂ₙ₊₁-L-O-, and the right end of the rightmost olefin oxide unit in the olefin oxide segment is connected to the left end of -R-X.

The anionic fluorosurfactants represented by formula (I), formula (Ia), formula (Ib) and formula (Ic) can be obtained, for example, by the following methods:
a corresponding fluoroalkyl alcohol is reacted with a certain proportion of propylene oxide and a second olefin oxide such as ethylene oxide (for example, in sequence) to produce a nonionic fluorosurfactant, which is subjected to the reaction such as carboxylation and sulfonation to produce the corresponding anionic surfactant.

For example, the preparation processes of formula (Ib) and formula (Ic) are respectively shown as follows:
1. Preparation of fluoroalkyl polyether nonionic surfactant from fluoroalkyl alcohol The fluoroalkyl alcohol is reacted with propylene oxide and ethylene oxide in sequence, and the overall reaction is as follows: 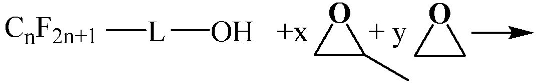 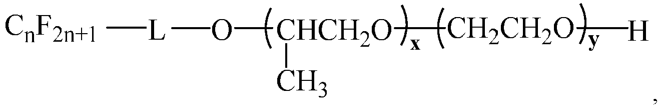 preferably: 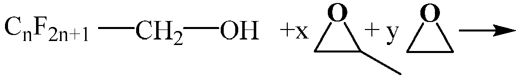 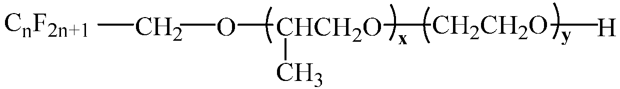 the successive reactions of the fluoroalkyl alcohol with propylene oxide and ethylene oxide can be carried out continuously, that is, the reaction with propylene oxide is directly followed by the reaction with ethylene oxide, or separately, that is, the reaction with propylene oxide is followed by an post-reaction treatment and then the reaction with ethylene oxide.
   Preferably, the reaction of the fluoroalkyl alcohol with propylene oxide and the reaction of the fluoroalkyl alcohol with ethylene oxide can be carried out independently each other under the following conditions: the reactions are carried out in the presence of a base, e.g. an inorganic base such as an alkali metal hydroxide, the molar ratio of the base to the fluoroalkyl alcohol is 1:(0.02-10), e.g. 1:(0.1-1), the reaction pressure is 0.05-1.6 MPa, e.g. 0.1-0.8MPa or 0.2-0.5MPa, e.g. 0.3MPa, the reaction time is 1-48 hours, e.g. 2-24 hours or 6-12 hours, e.g. 8 hours, the reaction temperature is 50-200°C, e.g. 100-180°C or 125-170°C, e.g. 150°C.
2. Preparation of anionic surfactant from fluoroalkyl polyether nonionic surfactant 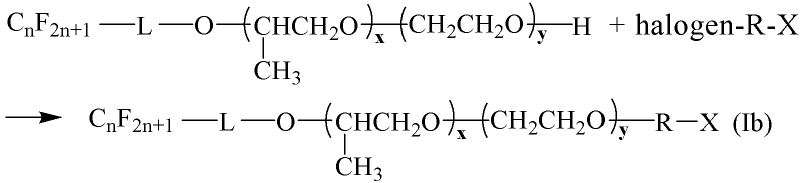 preferably,

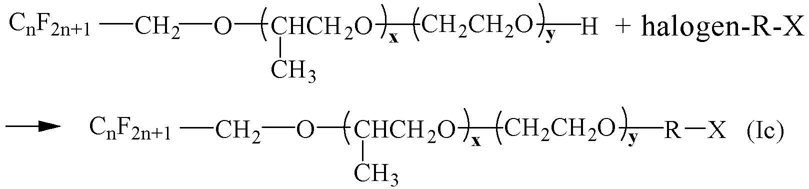

The reaction product of step 1 is reacted with an anionizing agent (halogen-R-X, e.g. a carboxylating agent, a sulfonating agent or a phosphating agent), then neutralized with an acid, followed by separating the resulting oil phase and neutralizing with a base;
preferably, the reaction product of step 1 is alkalized with a base before the reaction, wherein the molar ratio of the reaction product of step 1 to the base is 1:(1-10), e.g. 1:(1-5), e.g. 1:3, the alkalization temperature is 20-100°C, e.g. 60-95°C, e.g. 90°C, the alkalization time is 1-48 hours, e.g. 2-10 hours, e.g. 8 hours, and the base used is an inorganic base, e.g. an alkali metal hydroxide such as potassium hydroxide and sodium hydroxide;
preferably, the molar ratio of the reaction product of step 1 to the anionizing agent is 1:(1-10), e.g. 1:(1-4), e.g. 1:2, the reaction temperature is 50-140°C, e.g. 80-120°C, e.g. 100°C, and the reaction time is 1-20 hours, e.g. 2-16 hours, e.g. 12 hours;
preferably, the acid used for neutralization is an inorganic acid such as hydrochloric acid, nitric acid and sulfuric acid, and the pH of the reaction system after neutralization with the acid is 0.5-3, e.g. 1-2, e.g. 1; preferably, an inorganic base, e.g. an alkali metal hydroxide such as potassium hydroxide and sodium hydroxide is added to the separated oil phase, and the pH of the reaction system after neutralization with the base is 7-10, e.g. 7-9, e.g. 7-8;
preferably, the carboxylating agent is halogen-R-COOM, e.g. Cl-R-COOM; the sulfonating agent is halogen-R-OSO₃M, e.g. Cl-R-OSO₃M; the phosphating agent is halogen-R-OPO(OM)₂, e.g. Cl-R-OPO(OM)₂;
wherein, R is at least one of C₁-C₂₀ alkylene and a substituted C₁-C₂₀ alkylene, preferably, R is at least one of C₁-C₆ alkylene and a substituted C₁-C₆ alkylene;
n is an integer of 1-20, preferably 4-12;
x is any integer of 0-40 (e.g. 1-41), preferably 2-20, for example 4-20, e.g. 8-20; preferably, x is not 0; y is any integer of 0-40, preferably 2-20, for example 4-20, e.g. 8-20;
X is one of -COOM, -SO₃M, -OSO₃M, and -OPO₃M₂, preferably X is -COOM or -SO₃M; wherein M is a charge-balancing cation, and M is preferably an alkali metal cation, an alkaline earth metal cation or an ammonium cation, and more preferably Na⁺, K⁺ or NH₄⁺.

In a preferred embodiment of the present invention, according to the molecular structure of the target product, a commercially available fluoroalkyl primary alcohol CₙF₂ₙ₊₁CH₂OH used as an initiator and added to an autoclave, a basic catalyst such as sodium hydroxide and potassium hydroxide is added in an amount of 0.1%-5% by weight of the initiator; the autoclave is sealed, evacuated and heated to 100-200°C (e.g., 100-180°C); according to the designed number of polyoxypropylene blocks in the target molecular structure, a corresponding molar ratio of propylene oxide is added; the pressure in the autoclave is maintained at 0.1-0.5MPa; and the reaction is carried out for 6-12 hours to obtain a fluoroalkyl polyoxypropylene ether nonionic surfactant. The above product is used as an initiator, a basic catalyst such as sodium hydroxide and potassium hydroxide is added in an amount of 0.1%-5% by weight of the initiator; the autoclave is sealed, evacuated and heated to 100-200°C (e.g., 100-180°C); according to the designed number of polyoxyethylene blocks in the target molecular structure, a corresponding molar ratio of ethylene oxide is added; the pressure in the autoclave is maintained at 0.1-0.5MPa; and the reaction is carried out for 6-12 hours to obtain a fluoroalkyl polyoxypropylene polyoxyethylene ether nonionic surfactant, i.e., a fluoroalkyl polyether nonionic surfactant. The above product is used as an initiator, and a basic catalyst such as sodium hydroxide and potassium hydroxide is added in a molar ratio of 1:1-5; the mixture is alkalized at 20-100°C for 1-10 hours, and then a sulfonating agent or a carboxylating agent is added according to the structure of the target molecular, wherein the molar ratio of non-ionic fluorosurfactant:(sulfonating agent or carboxylating agent) is 1:(1-4); the mixture is heated to 50-100°C to continue the reaction for 1-20 hours, and then hydrochloric acid is added to neutralize to pH<3; the separation of oil phase and aqueous phase is performed; an alkali solution is added to the oil phase for neutralization; and finally a sulfonate or carboxylate salt ether-type fluorosurfactant is obtained.

The zwitterionic surfactant may be a commercially available product, preferably at least one of imidazoline-type surfactant, amino acid-type surfactant, and betaine-type surfactant; more preferably betaine-type surfactant.

The imidazoline-type surfactant includes, but is not limited to carboxylic acid-based imidazoline-type surfactants, sulfate-based imidazoline-type surfactants, sulfonic/sulfuric acid-based imidazoline-type surfactants, phosphate-based imidazoline-type surfactants, and other imidazoline-type surfactants.

Examples of carboxylic acid-based imidazoline-type surfactant include: 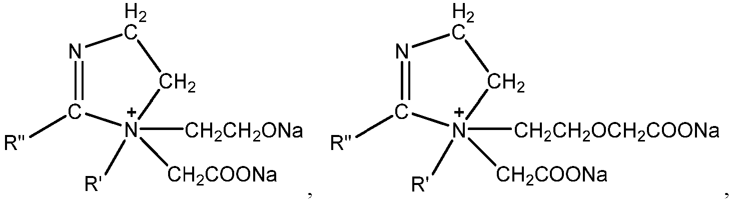 wherein R' can be -OH, -OSO₃R" and the like, R" is C₆-C₂₂alkyl, for example: 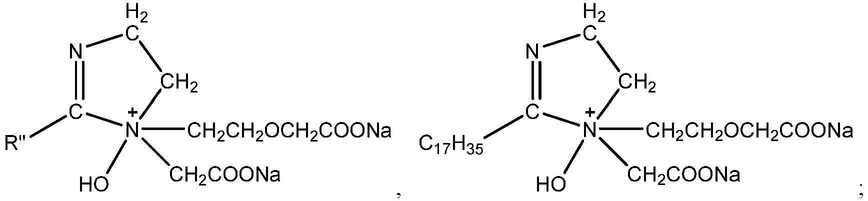 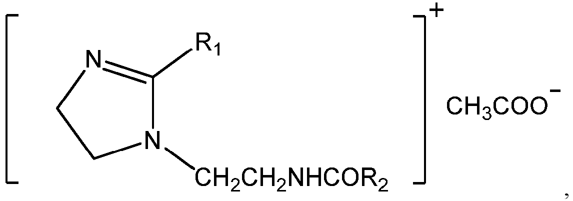 wherein R₁ and R₂ are each independently C₆-C₂₂alkyl, for example: 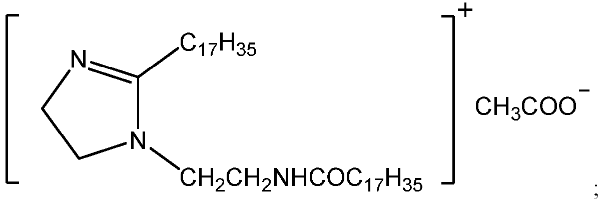 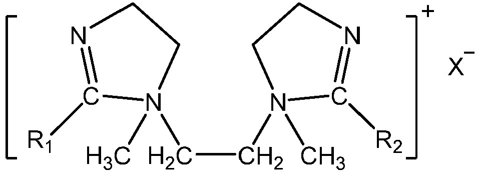 wherein R₁ and R₂ are each independently C₆-C₂₂alkyl, X⁻ is a carboxylic acid group, e.g. CH₃COO⁻.

Examples of sulfate-based imidazoline-type surfactant include: 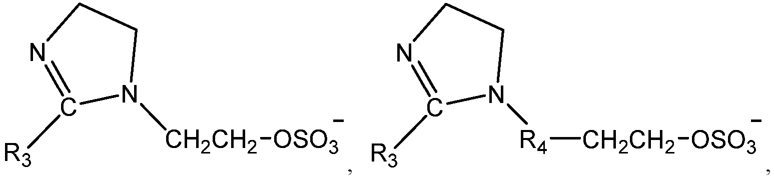 wherein R₃ is C₆-C₂₂alkyl, R₄ is C₁-C₆ alkylene.

Examples of sulfonic/sulfuric acid-based imidazoline-type surfactant include: 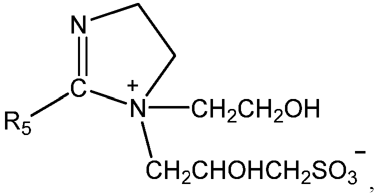 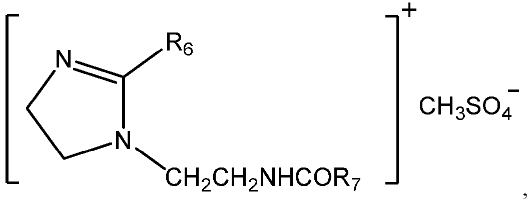 wherein R₅, R₆ and R₇ are each independently C₆-C₂₂alkyl, for example:

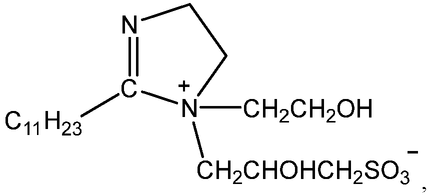

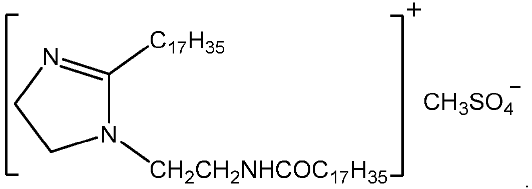

Examples of phosphate-based imidazoline-type surfactant include:

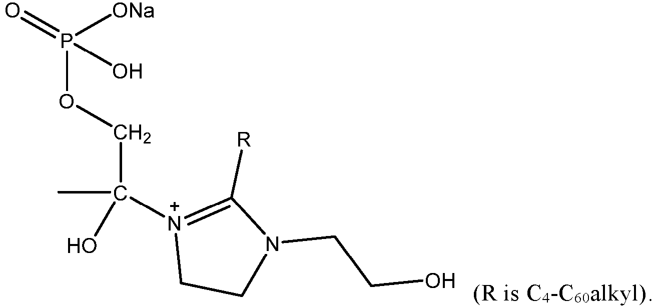

Examples of other imidazoline-type surfactant include: 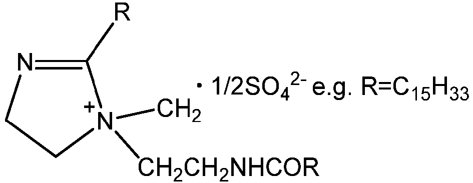 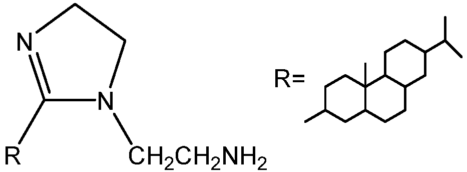 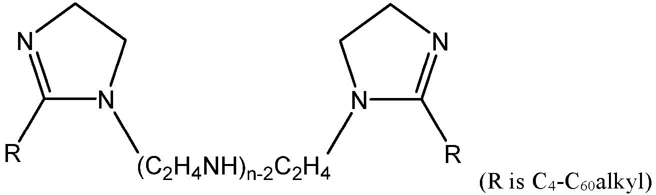 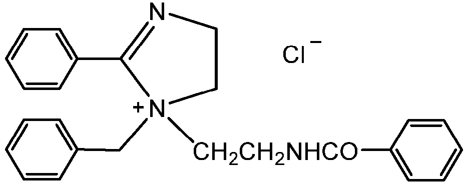 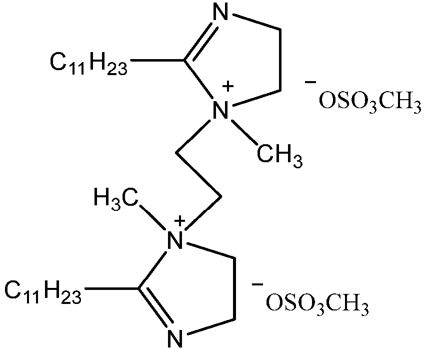 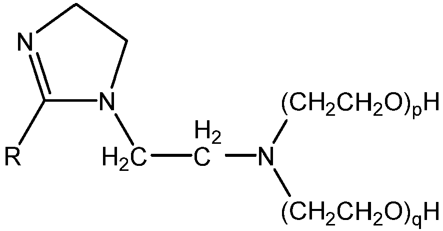 (R is C₄-C₆₀alkyl, p and q are each independently an integer of 1-20).

The amino acid-type surfactant is preferably:
carboxylic acid-based amino acid, for example,
N-alkyl-beta-alanine or a salt thereof, e.g. RNHCH₂CH₂COOM (wherein R is C₆-C₂₀alkyl, M is hydrogen or an alkali metal, e.g. sodium);
N-acylamino acid or a salt thereof, e.g. R-CO-N(CH₃)CH₂COOM, MOOCCH₂CH₂NHOCCH₂CH₂COOM, RCON(CH₃)CH₂COOM or RCON(R₁)CH(R₂)COOM (wherein R is C₆-C₂₀alkyl, R₁ is C₁-C₆alkyl, R₂ is C₁-C₆alkyl, M is hydrogen or an alkali metal, e.g. sodium);
sulfonic acid-based amino acid, e.g. R-phenyl-CH₂NHCH₂CH₂SO₃M (wherein R is C₆-C₂₀alkyl, M is an alkali metal, e.g. sodium), N-alkylaminoethylsulfonate, e.g. RNHCH₂CH₂SO₃M (wherein R is C₆-C₂₀alkyl, M is an alkali metal, e.g. sodium), or R-N(CH₂SO₃M)₂ (R is C₆-C₂₀alkyl, M is an alkali metal, e.g. sodium); sulfuric acid-based amino acid, e.g. CH₃(CH₂)₇CH(O-SO₃H)CH₂(CH₂)₇CONHCH₂CH₂NH₂;
phosphoric acid-based amino acid;
Gemini amino-acid surfactants.

The betaine-type surfactant (zwitterionic surfactant) is preferably at least one of R'₃NCHCₐH₂ₐ₊₁COOY, C_{b}H_{2b+1}R'₂NR"COOY, and C_{c}H_{2c+1}R'₂NR"SO₃Y; wherein, R' is optionally substituted C₁₋₈alkyl; R"is an optionally substituted C₁₋₁₀alkylene; Y is a charge-balancing cation, preferably an alkali metal cation, an alkaline earth metal cation or an ammonium cation, more preferably Na⁺, K⁺ or NH₄⁺; a, b and c are each independently an integer of 1-30; the betaine-type surfactant (zwitterionic surfactant) is more preferably at least one of (CH₃)₃NCHC₁₂H₂₅COOK, C₁₆H₃₃(CH₃)₂NCH₂COONa, C₁₄H₂₉N(CH₃)₂C₂H₄SO₃Na, and C₈H₁₇N(CH₃)₂CH₂CH(OH)CH₂SO₃Na.

The synergistic auxiliary is at least one of urea, formamide, N-methylacetamide, and guanidine salt; preferably at least one of urea and formamide.

In a preferred embodiment of the present invention, the water-lock releasing chemical agent for oil and gas reservoirs also comprises a solvent, and the used amount of the solvent is the balance.

In a preferred embodiment of the present invention, the solvent is at least one of water and small molecule organic solvent; preferably, the water is at least one of deionized water and inorganic mineral-containing water; and/or the small molecule organic solvent is at least one of small molecule alcohol, small molecule ether, small molecule aldehyde, small molecule ketone, small molecule amine, and small molecule alcoholamine.

In a preferred embodiment of the present invention, the inorganic mineral-containing water is at least one of tap water, river water, lake water, and formation water in oil and gas field; and/or, the small molecule alcohol is at least one of C₁-C₆ monohydric alcohols, C₂-C₆ dihydric alcohols, and C₃-C₆ polyhydric alcohols, preferably, the small molecule alcohol is at least one of C₁-C₃ monohydric alcohols, C₂-C₃ dihydric alcohols, and glycerol; and/or, the small molecule ether is at least one of C₁-C₆ monohydric ethers, preferably, the small molecule ether is at least one of dimethyl ether, methyl vinyl ether, methyl ethyl ether, ethylene glycol monomethyl ether, ethyl vinyl ether, and diethyl ether.

In a preferred embodiment of the present invention, in case that the solvent is water and a small molecule organic solvent, the mass ratio of the small molecule organic solvent to water is (0-10): 10, preferably (1-10):10.

The second object of the present invention is to provide a method for preparing a water-lock releasing chemical agent for oil and gas reservoirs, comprising the following steps:
the anionic fluorosurfactant, the zwitterionic surfactant and a part of the solvent are mixed to dissolve; then the synergistic auxiliary and the remaining solvent are added, stirred and mixed evenly to obtain the water-lock releasing chemical agent for oil and gas reservoirs; preferably, a part of the solvent comprises 50-100% by the total weight of the solvent, and the remaining solvent comprises 0-50% by the total weight of the solvent.

The reason that the solvent is added in two steps because the aqueous surfactant solution can form a unique micelle structure. It is preferred to dissolve the two surfactants first. A combination of two different types of surfactants is firstly combined and stabilized in an aqueous solution, and then the auxiliary is added.

The third object of the present invention is to provide use of a water-lock releasing chemical agent for oil and gas reservoirs in eliminating the water-lock damage in oil and gas reservoirs.

Those skilled in the art can utilize the existing water-lock releasing construction process. For example, but not limited to, a certain amount of such a water-lock releasing agent, which is prepared by diluting with water to an effective concentration of 0.001-10 wt% based on the sum of the effective mass fractions of the anionic fluorosurfactant, the zwitterionic surfactant, and the synergistic auxiliary, is injected into oils, waters, or gas wells. The water can be selected from deionized water and/or inorganic mineral-containing water, and specifically, the inorganic mineral-containing water can be at least one of tap water, river/lake water, and formation water in oil and gas fields. The water-lock releasing chemical agent provided by the present invention can be used in conjunction with the existing acidification construction of the current oil and gas reservoirs in the specific on-site construction, and hydrochloric acid and the corrosion inhibitor system have no negative impact on the performance of the water-lock releasing chemical agent of the present invention.

**In** a preferred embodiment of the present invention, based on the sum of the mass fractions of the anionic fluorosurfactant, the zwitterionic surfactant, and the synergistic auxiliary, the water-lock releasing chemical agent for oil and gas reservoirs is diluted with water to a mass concentration of 0.001%-10%, preferably 0.01%-2%, particularly for example 0.05%, 0.1%, 0.5%, 1%, 1.5%, and 2%.

The present invention also aims to provide a compound represented by the following formula (I), formula (Ia), formula (Ib) or formula (Ic): 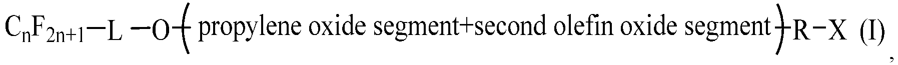 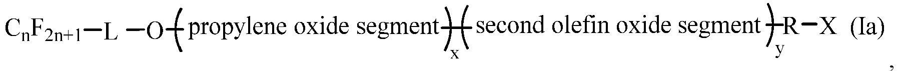 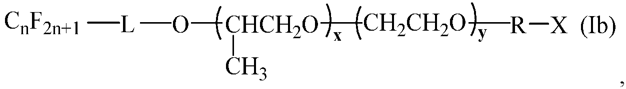 or 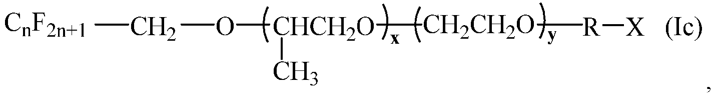 wherein,
the second olefin oxide segment is selected from ethylene oxide, butylene oxide and styrene oxide;
the total number of propylene oxide units in the propylene oxide segment is any integer of 1-40, preferably 2-20, more preferably 4-20, e.g. 8-20;
the total number of second olefin oxide units in the second olefin oxide segment is any integer of 0-40, preferably 2-20, more preferably 4-20, e.g. 8-20;
L is a linking group, for example C₁₋₆ alkylene (e.g. -CH₂- and -CH₂CH₂-), -CO-, -NH-; preferably, L is not a chemical bond;
R is at least one of C₁-C₂₀ alkylene and a substituted C₁-C₂₀ alkylene, preferably, R is at least one of C₁-C₆ alkylene and a substituted C₁-C₆ alkylene;
n is an integer of 1-20, preferably 4-12;
x is any integer of 0-40 (e.g. 1-41), preferably 2-20, for example 4-20, e.g. 8-20; preferably, x is not 0;
y is any integer of 0-40, preferably 2-20, for example 4-20, e.g. 8-20;
X is one of -COOM, -SO₃M, -OSO₃M, and -OPO₃M₂, preferably X is -COOM or -SO₃M; wherein M is a charge-balancing cation, and M is preferably an alkali metal cation, an alkaline earth metal cation or an ammonium cation, and more preferably Na⁺, K⁺ or NH₄⁺.

Preferably, examples of the above compounds are:

C₁₀F₂₁CH₂O(PO)₁₀(EO)₁₆C₃H₆COONa;

C₄F₉CH₂O(PO)₈(EO)₈C₂H₄SO₃Na;

C₆F₁₃CH₂O(PO)₄(EO)₁₀CH₂OPO₃Na₂;

and

C₁₂F₂₅CH₂O(PO)₁₂(EO)₁₈CH₂COONa.

In the above general formula (I), "propylene oxide segment+second olefin oxide segment" refers to a segment consisting only of propylene oxide, or a segment consisting only of propylene oxide and one or more types of second olefin oxide, wherein in the latter case, the propylene oxide unit(s) and the second alkylene oxide unit(s) may be arranged regularly or irregularly.

In the above general formula (Ia), 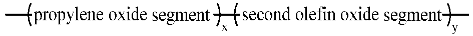 means that the propylene oxide segment is first connected to the perfluoroalkyl (CₙF₂ₙ₊₁) through -L-O-, and then the second olefin oxide segment is connected to the propylene oxide segment, and in the second olefin oxide segment, the second alkylene oxide units can be arranged regularly or irregularly.

In the present invention, based on the order from left to right, an ethylene oxide unit refers to -CH₂CH₂O-; a propylene oxide unit refers to -CH(CH₃)CH₂O-; a butylene oxide unit refers to -CH(ethyl)CH₂O-; and a styrene oxide unit refers to -CH(phenyl)CH₂O-. In the case where the olefin oxide units are connected to each other, the left end of an olefin oxide unit is connected to the right end of another olefin oxide unit, the left end of the leftmost olefin oxide unit in the olefin oxide segment is connected to the right end of CₙF₂ₙ₊₁-L-O-, and the right end of the rightmost olefin oxide unit in the olefin oxide segment is connected to the left end of -R-X.

Compared with the prior art, the present invention has the following beneficial effects:
The water-lock releasing chemical agent provided by the present invention can make components interact with each other and enhance the synergy by combining the anionic fluorosurfactant and the zwitterionic surfactant, greatly reduce the surface tension of water, especially can reduce the surface tension of water to less than 20mN/m. Moreover, the present invention can adjust a matrix surface having a strongly water wettability to neutral wettability, and thus promote the discharge of the blocked fluid in the formation. Furthermore, by controlling the use of the anionic fluorosurfactant and the zwitterionic surfactant in a specific ratio in combination, the obtained surfactant composition arranges at the gas-liquid interface tighter than a single surfactant, which can greatly improve the surface and interface performance of the system and the wettability regulation ability. Especially the addition of the zwitterionic surfactant in an appropriate ratio can effectively control the reasonable adsorption of the chemical agent system on the surface of the electronegative matrix, effectively regulate the surface from strongly water wettability to neutral wettability, promote the discharge of the blocked fluid in the formation, and effectively eliminate the water-lock damage of the oil-gas reservoir. In addition, the addition of the synergistic auxiliary can reduce the apparent viscosity of the whole system, so that the fluidity of the fluid causing damage is improved, and the water-lock releasing is further promoted. The addition of a small molecule solvent is not only to improve the solubility of the system, but also to partially reduce the viscosity of the system.

The water-lock releasing chemical agent prepared by the present invention has better stability, good temperature resistance and salt resistance, can maintain stable performance under the conditions of a temperature of 120°C or below and a mineralization degree of 100000 mg/L NaCl, has a wide temperature and salinity adaptability range, and can be used in water-lock releasing construction in various formation conditions.

The anionic fluorosurfactant and the zwitterionic surfactant used in the present invention can be conventional industrial surfactants with low cost. The new anionic fluorosurfactant disclosed in the present invention can also be prepared by a simple method, and its cost is low. However, currently, biosurfactants are usually produced by microorganisms and the like through fermentation process and separated and purified, and their production cost is higher than that of chemically synthesized surfactants. At the same time, due to the limitations of production process and separation technology, domestic biosurfactants may have certain batch differences in the purity and effective component ratio of commercial products.

### Specific embodiments

The present invention is described in detail below in conjunction with specific embodiments. It is necessary to point out that the following examples are only used to further illustrate the present invention and cannot be understood as limiting the scope of protection of the present invention. Some non-essential improvements and adjustments to the present invention made by those skilled in the art based on the contents of the present invention still fall within the scope of protection of the present invention.

The raw materials used in the examples are all conventional commercially available raw materials; the raw materials used in the examples and comparative examples, if not specifically limited, are all disclosed in the prior art, for example, they can be directly purchased or prepared according to the preparation methods disclosed in the prior art. For example, the anionic fluorosurfactants can be prepared by sequentially reacting the corresponding fluoroalkyl alcohol with a certain proportion of propylene oxide and ethylene oxide to obtain a nonionic fluorosurfactant, and then the carboxylation, sulfonation and other reactions are carried out to produce the corresponding anionic surfactants; the zwitterionic surfactants are all commercially available; and the fluoroalkyl alcohols are commercially available products.

### Example 1

Step 1: C₁₀F₂₁CH₂OH was used as an initiator and added to an autoclave, potassium hydroxide was added in an amount of 0.5% by weight of the initiator; the autoclave was sealed, evacuated and heated to 150°C; propylene oxide was added in a molar ratio of 1:10 (initiator:propylene oxide); the pressure in the autoclave was maintained at 0.3MPa; and the reaction was carried out for 8 hours to obtain a reaction product. The reaction product was sampled, separated and purified by column chromatography and analyzed by nuclear magnetic mass spectrometry, and it was confirmed that the product mainly included C₁₀F₂₁CH₂O(PO)₁₀.

Step 2: the reaction product of step 1 was used as an initiator and added to an autoclave, potassium hydroxide was added in an amount of 0.5% by weight of the initiator; the autoclave was sealed, evacuated and heated to 150°C; ethylene oxide was added in a molar ratio of 1:16 (initiator:ethylene oxide); the pressure in the autoclave was maintained at 0.3MPa; and the reaction was carried out for 8 hours to obtain a reaction product. The reaction product was sampled, separated and purified by column chromatography and analyzed by nuclear magnetic mass spectrometry, and it was confirmed that the product mainly included C₁₀F₂₁CH₂O(PO)₁₀(EO)₁₆.

Step 3: the reaction product of step 2 was used as an initiator, potassium hydroxide was added in a molar ratio of 1:2 (initiator:ethylene oxide); the mixture was alkalized at 90°C for 8 hours, and then a carboxylating agent ClC3H6COONa was added in a molar ratio of 1:2 (initiator:carboxylating agent); the mixture was heated to 100°C to continue the reaction for 12 hours, and then hydrochloric acid was added to neutralize to pH =1; the separation of oil phase and aqueous phase was performed; sodium hydroxide was added to the oil phase for neutralization to obtain a reaction product. The reaction product was separated and purified by column chromatography and analyzed by nuclear magnetic mass spectrometry, and it was confirmed that the product mainly included C₁₀F₂₁CH₂O(PO)₁₀(EO)₁₆C₃H₆COONa.

The water-lock releasing chemical agent was composed of the following raw materials in parts by weight: 20 parts by weight of anionic fluorosurfactant C₁₀F₂₁CH₂O(PO)₁₀(EO)₁₆C₃H₆COONa, 30 parts by weight of zwitterionic surfactant (CH₃)₃NCHC₁₂H₂₅COOK, 5 parts by weight of formamide, and 45 parts by weight of solvent, wherein the solvent was deionized water, methyl vinyl ether and ethanol in a mass ratio of 4:1:1.

Preparation method: the above-mentioned two surfactants and half of the solvent were mixed and stirred to completely dissolve; formamide and the remaining solvent were added, stirred and mixed evenly to obtain a water-lock releasing chemical agent.

### Example 2

Preparation of the anionic fluorosurfactant: the difference from Example 1 was that a different fluoroalkyl alcohol C₄F₉CH₂OH was used, and the molar ratio of fluoroalkyl alcohol to propylene oxide and ethylene oxide was 1:8:8, and a sulfonating agent ClC₂H₄SO₃Na was used in the synthesis of the anionic surfactant; others were identical to those in Example 1, and an anionic fluorosurfactant C₄F₉CH₂O(PO)₈(EO)₈C₂H₄SO₃Na was obtained.

The water-lock releasing chemical agent was composed of the following raw materials in parts by weight: 10 parts by weight of anionic fluorosurfactant C₄F₉CH₂O(PO)₈(EO)₈C₂H₄SO₃Na, 20 parts by weight of zwitterionic surfactant C₁₆H₃₃(CH₃)₂NCH₂COONa, 10 parts by weight of urea, and60 parts by weight of solvent, wherein the solvent was deionized water and ethanol in a mass ratio of 1:1.

The preparation method of the water-lock releasing chemical agent was identical to that of Example 1.

### Example 3

Preparation of the anionic fluorosurfactant: the difference from Example 1 was that a different fluoroalkyl alcohol C₆F₁₃CH₂OH was used, and the molar ratio of fluoroalkyl alcohol to propylene oxide and ethylene oxide was 1:4:10, and a phosphating agent ClCH₂OPO₃Na₂ was used in the synthesis of the anionic surfactant; others were identical to those in Example 1, and an anionic fluorosurfactant C₆F₁₃CH₂O(PO)₄(EO)₁₀CH₂OPO₃Na₂ was obtained.

The water-lock releasing chemical agent was composed of the following raw materials in parts by weight: 5 parts by weight of anionic fluorosurfactant C₆F₁₃CH₂O(PO)₄(EO)₁₀CH₂OPO₃Na₂, 15 parts by weight of zwitterionic surfactant C₁₄H₂₉N(CH₃)₂C₂H₄SO₃Na, 8 parts by weight of N-methylacetamide, and72 parts by weight of solvent, wherein the solvent was deionized water.

The preparation method of the water-lock releasing chemical agent was identical to that of Example 1.

### Example 4

Preparation of the anionic fluorosurfactant: the difference from Example 1 was that a different fluoroalkyl alcohol C₁₂F₂₅CH₂OH was used, and the molar ratio of fluoroalkyl alcohol to propylene oxide and ethylene oxide was 1:12:18, and a carboxylating agent ClCH₂COONa was used in the synthesis of the anionic surfactant; others were identical to those in Example 1, and an anionic fluorosurfactant C₁₂F₂₅CH₂O(PO)₁₂(EO)₁₈CH₂COONa was obtained.

The water-lock releasing chemical agent was composed of the following raw materials in parts by weight: 20 parts by weight of anionic fluorosurfactant C₁₂F₂₅CH₂O(PO)₁₂(EO)₁₈CH₂COONa, 10 parts by weight of zwitterionic surfactant C₈H₁₇N(CH₃)₂CH₂CH(OH)CH₂SO₃Na, 5 parts by weight of urea, and 65 parts by weight of solvent, wherein the solvent was deionized water and methanol in a mass ratio of 10:1.

The preparation method of the water-lock releasing chemical agent was identical to that of Example 1.

### Comparative Example 1

The difference from Example 1 was that: no zwitterionic surfactant (CH₃)₃NCHC₁₂H₂₅COOK was added, and it was replaced with the same amount of the anionic fluorosurfactant C₁₀F₂₁CH₂O(PO)₁₀(EO)₁₆C₃H₆COONa, that is, the mass fraction of the anionic fluorosurfactant was 50%.

Other raw material compositions and preparation method were identical to those in Example 1 to obtain a water-lock releasing chemical agent.

### Comparative Example 2

The difference from Example 1 was that: no anionic fluorosurfactant C₁₀F₂₁CH₂O(PO)₁₀(EO)₁₆C₃H₆COONa was added, and it was replaced with the same amount of the zwitterionic surfactant (CH₃)₃NCHC₁₂H₂₅COOK, that is, the mass fraction of the zwitterionic surfactant was 50%; Other raw material compositions and preparation method were identical to those in Example 1 to obtain a water-lock releasing chemical agent.

### Comparative Example 3

The difference from Example 1 was that: no formamide was added, and it was replaced with the same amount of the solvent, that is, the mass fraction of the solvent was 50%.

Other raw material compositions and preparation method were identical to those in Example 1 to obtain a water-lock releasing chemical agent.

### Comparative Example 4

The water-lock releasing chemical agent was composed of the following raw materials in parts by weight: 2.5 parts by weight of anionic fluorosurfactant C₁₀F₂₁CH₂O(PO)₁₀(EO)₁₆C₃H₆COONa, 45 parts by weight of zwitterionic surfactant (CH₃)₃NCHC₁₂H₂₅COOK, and 52.5 parts by weight of solvent, wherein the solvent is deionized water, methyl vinyl ether and ethanol in a mass ratio of 4:1:1.

The preparation method of the water-lock releasing chemical agent was identical to that in Example 1 to obtain a water-lock releasing chemical agent.

### Comparative Example 5

The water-lock releasing chemical agent was composed of the following raw materials in parts by weight: 20 parts by weight of anionic fluorosurfactant C₁₀F₂₁CH₂O(EO)₁₆C₃H₆COONa, 30 parts by weight of zwitterionic surfactant (CH₃)₃NCHC₁₂H₂₅COOK, 5 parts by weight of formamide, and 45 parts by weight of solvent, wherein the solvent is deionized water, methyl vinyl ether and ethanol in a mass ratio of 4:1:1.

The preparation method of the water-lock releasing chemical agent was identical to that in Example 1 to obtain a water-lock releasing chemical agent.

The water-lock releasing chemical agents prepared in examples and comparative examples were diluted with deionized water to an effective concentration of 0.1wt%, and the surface tension of each chemical agent was measured according to GB/T 22237-2008 Determination of the surface tension of surfactants. The measurement results are shown in Table 1.

**Table 1**

| Sample | Surface tension (mN/m) |
|---|---|
| Example 1 | 15.5 |
| Example 2 | 15.9 |
| Example 3 | 16.8 |
| Example 4 | 16.1 |
| Comparative Example 1 | 17.1 |
| Comparative Example 2 | 28.7 |
| Comparative Example 3 | 16.4 |
| Comparative Example 4 | 27.9 |
| Comparative Example 5 | 15.8 |

As shown in Table 1, the surfactant compositions provided by Examples 1-4 of the present invention had lower surface tensions. In particular, as shown by the comparison between Example 1 and Comparative Examples 1-2, the combination of the anionic fluorosurfactant and the zwitterionic surfactant could significantly reduce the surface tension of water due to the interaction and synergistic effect between the components.

The contact angles of the water-lock releasing chemical agents prepared in Examples 1-4 and Comparative Examples 1-5 were tested to evaluate the ability of the water-lock releasing chemical agent for oil and gas reservoirs in regulating the wettability in the formation.

Specifically, a hydrophilic quartz sheet was used as the test matrix. After the quartz sheet was ultrasonically cleaned multiple times with an alcohol solvent and ultrapure water, the ultrapure water was almost completely spread on the experimental quartz sheet, and the contact angle was tested to be less than 5°. The water-lock releasing chemical agents prepared in Examples 1-4 and Comparative Examples 1-5 were diluted to an effective concentration of 0.1wt% with deionized water to obtain a test solution. The quartz sheet was immersed in the solution for 24 hours and then taken out and dried naturally. (i) the contact angle 1 of water (5 microliters) and the treated quartz sheet was tested in the air, and the test results are shown in Table 2; (ii) the treated quartz sheet was immersed in water, and the contact angle 2 of n-octane (5 microliters) and the treated quartz sheet in water was tested, and the test results are shown in Table 3.

**Table 2**

| Sample | Contact angle 1 (°) |
|---|---|
| Example 1 | 105.9 |
| Example 2 | 99.1 |
| Example 3 | 98.2 |
| Example 4 | 95.9 |
| Comparative Example 1 | 69.5 |
| Comparative Example 2 | 51.8 |
| Comparative Example 3 | 92.1 |
| Comparative Example 4 | 70.0 |
| Comparative Example 5 | 83.0 |

**Table 3**

| Sample | Contact angle 2 (°) |
|---|---|
| Example 1 | 103.7 |
| Example 2 | 102.5 |
| Example 3 | 100.2 |
| Example 4 | 100.9 |
| Comparative Example 1 | 79.7 |
| Comparative Example 2 | 22.3 |
| Comparative Example 3 | 98.1 |
| Comparative Example 4 | 52.2 |
| Comparative Example 5 | 60.5 |

As shown in Tables 2 and 3, the water-lock releasing chemical agents provided in Examples 1-4 of the present invention could adjust a matrix surface having a strongly water wettability to neutral wettability. In particular, as shown by the comparison between Example 1 and Comparative Examples 1-2, the combination of the anionic fluorosurfactant and the zwitterionic surfactant could exhibit significantly better wettability regulation performance than a single chemical agent due to the interaction and synergistic effect between the components.

The water-lock releasing chemical agents prepared in the above Examples 1-4 and Comparative Examples 1-5 were diluted to an effective concentration of 0.1wt%, and the viscosity was obtained by testing according to GB/T 22235-2008 Determination of Viscosity of Liquids. The results are shown in Table 4.

**Table 4**

| Sample | Viscosity (mPa· s) |
|---|---|
| Example 1 | 0.89 |
| Example 2 | 0.88 |
| Example 3 | 0.95 |
| Example 4 | 0.91 |
| Comparative Example 1 | 0.92 |
| Comparative Example 2 | 0.93 |
| Comparative Example 3 | 1.08 |
| Comparative Example 4 | 1.02 |
| Comparative Example 5 | 0.98 |

In conclusion, the lower the surface tension, the easier it is for the liquid that produces the water-lock to be released from the capillary channels where the damage is caused; if the formation wettability is close to neutrality, the fluid that produces damage, such as water and condensate oil, is less likely to adhere to the surface of the formation matrix, thereby allowing the liquid that produces water-lock damage to be discharged as quickly as possible; the lower the fluid viscosity, the faster the liquid that produces damage is discharged. The viscosities of Examples 1-4 diluted to 0.1wt% were 0.89 mPa·s-0.95 mPa·s. Compared with Comparative Examples 3-4 in which no synergistic auxiliary was added (their viscosities were 1.08 mPa·s and 1.02 mPa·s, respectively). The lower the fluid viscosity, the faster the liquid was discharged.

The water-lock releasing chemical agents prepared in Examples 1-4 could make components interact with each other and enhance the synergy, and greatly reduce the surface tension of water, especially could reduce the surface tension of water to less than 20mN/m. Moreover, they could adjust a matrix surface having a strongly water wettability to neutral wettability and thus promote the discharge of the blocked fluid in the formation. The apparent viscosity of the whole system was relatively low, so that the fluidity of the fluid causing damage is improved, and the water-lock releasing is further promoted. Moreover, the anionic fluorosurfactant and the zwitterionic surfactant used in the present invention were both conventional industrial surfactants. These materials feature relatively low costs, excellent temperature/salt resistance, and enhanced stability, making the practical use and popularization easier.

## Claims

1. A water-lock releasing chemical agent for oil and gas reservoirs, containing an anionic fluorosurfactant, a zwitterionic surfactant and a synergistic auxiliary;
preferably, the anionic fluorosurfactant is a non-perfluoroalkyl polyether anionic fluorosurfactant;
the total weight of the water-lock releasing chemical agent for oil and gas reservoirs is 100%,
anionic fluorosurfactant: 1-40%; preferably 5%-20%;
zwitterionic surfactant: 1-40%; preferably 5%-30%;
synergistic auxiliary: 0.5-20%; preferably 1%-10%.

2. The water-lock releasing chemical agent for oil and gas reservoirs according to claim 1, wherein
the anionic fluorosurfactant is at least one of fluoroalkyl polyether acid salt, fluoroalkyl polyether acid ester, and fluoroalkyl polyether acid ester salt, preferably at least one of non-perfluoroalkyl polyether acid salt, non-perfluoroalkyl polyether acid ester, and non-perfluoroalkyl polyether acid ester salt;
preferably, the anionic fluorosurfactant includes a compound represented by the following formula (I), formula (Ia), formula (Ib) or formula (Ic): 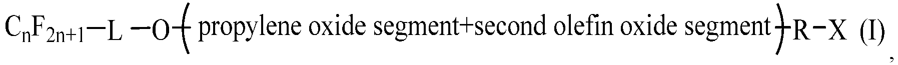 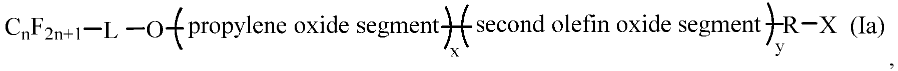 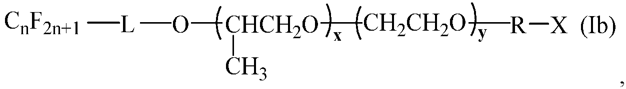
or 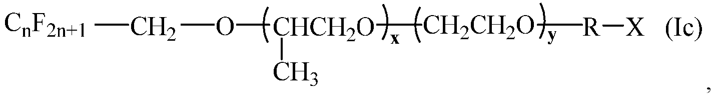 wherein,
the second olefin oxide segment is selected from ethylene oxide, butylene oxide and styrene oxide;
the total number of propylene oxide units in the propylene oxide segment is any integer of 1-40, preferably 2-20, more preferably 4-20, e.g. 8-20;
the total number of second olefin oxide units in the second olefin oxide segment is any integer of 0-40, preferably 2-20, more preferably 4-20, e.g. 8-20;
L is a linking group, for example C₁₋₆ alkylene (e.g. -CH₂- and -CH₂CH₂-), -CO-, -NH-; preferably, L is not a chemical bond;
R is at least one of C₁-C₂₀ alkylene and a substituted C₁-C₂₀ alkylene, preferably, R is at least one of C₁-C₆ alkylene and a substituted C₁-C₆ alkylene;
n is an integer of 1-20, preferably 4-12;
x is any integer of 0-40, preferably 2-20, for example 4-20, e.g. 8-20; preferably, x is not 0;
y is any integer of 0-40, preferably 2-20, for example 4-20, e.g. 8-20;
X is one of -COOM, -SO₃M, -OSO₃M, and -OPO₃M₂, wherein M is a charge-balancing cation, M is preferably an alkali metal cation, an alkaline earth metal cation or an ammonium cation, more preferably Na⁺, K⁺ or NH₄⁺;
more preferably, the anionic fluorosurfactant is selected from:
C₁₀F₂₁CH₂O(PO)₁₀(EO)₁₆C₃H₆COONa;
C₄F₉CH₂O(PO)₈(EO)₈C₂H₄SO₃Na;
C₆F₁₃CH₂O(PO)₄(EO)₁₀CH₂OPO₃Na₂;
and
C₁₂F₂₅CH₂O(PO)₁₂(EO)₁₈CH₂COONa.

3. The water-lock releasing chemical agent for oil and gas reservoirs according to any of the precedent claims, wherein
the zwitterionic surfactant is at least one of imidazoline-type surfactant, amino acid-type surfactant, and betaine-type surfactant;
the zwitterionic surfactant is preferably at least one of R'₃NCHCₐH₂ₐ₊₁COOY, C_{b}H_{2b+1}R'₂NR"COOY, and C_{c}H_{2c+1}R'₂NR"SO₃Y; wherein, R' is an optionally substituted C₁₋₈alkyl; R"is an optionally substituted C₁₋₁₀alkylene; Y is a charge-balancing cation, an alkali metal cation, an alkaline earth metal cation or an ammonium cation, more preferably Na⁺, K⁺ or NH₄⁺; a, b and c are each independently an integer of 1-30; the zwitterionic surfactant is more preferably at least one of(CH₃)₃NCHC₁₂H₂₅COOK, C₁₆H₃₃(CH₃)₂NCH₂COONa, C₁₄H₂₉N(CH₃)₂C₂H₄SO₃Na, and C₈H₁₇N(CH₃)₂CH₂CH(OH)CH₂SO₃Na; and/or,
the synergistic auxiliary is at least one of urea, formamide, N-methylacetamide, and guanidine salt.

4. The water-lock releasing chemical agent for oil and gas reservoirs according to any of the precedent claims, wherein
the water-lock releasing chemical agent for oil and gas reservoirs optionally comprises a solvent, and the used amount of the solvent is the balance, e.g. based on 100wt% of the total weight of the water-lock releasing chemical agent for oil and gas reservoirs, the used amount of the solvent is 0-97.5%, e.g. 40-89%.

5. The water-lock releasing chemical agent for oil and gas reservoirs according to claim 4, wherein
the solvent is at least one of water and small molecule organic solvent; preferably,
the water is at least one of deionized water and inorganic mineral-containing water; and/or,
the small molecule organic solvent is at least one of small molecule alcohol, small molecule ether, small molecule aldehyde, small molecule ketone, small molecule amine, and small molecule alcoholamine.

6. The water-lock releasing chemical agent for oil and gas reservoirs according to claim 5, wherein
the inorganic mineral-containing water is at least one of tap water, river water, lake water, and formation water in oil and gas field; and/or,
the small molecule alcohol is at least one of C₁-C₆ monohydric alcohols, C₂-C₆ dihydric alcohols, and C₃-C₆ polyhydric alcohols, preferably, the small molecule alcohol is at least one of C₁-C₃ monohydric alcohols, C₂-C₃ dihydric alcohols, and glycerol; and/or,
the small molecule ether is at least one of C₁-C₆ monohydric ethers, preferably, the small molecule ether is at least one of dimethyl ether, methyl vinyl ether, methyl ethyl ether, ethylene glycol monomethyl ether, ethyl vinyl ether, and diethyl ether.

7. The water-lock releasing chemical agent for oil and gas reservoirs according to claim 5, wherein
in case that the solvent is water and a small molecule organic solvent, the mass ratio of the small molecule organic solvent to water is (0-10): 10, preferably (1 -10):10.

8. A method for preparing the water-lock releasing chemical agent for oil and gas reservoirs according to any of claims 1-7, wherein said method comprises the following steps:
the anionic fluorosurfactant, the zwitterionic surfactant and a part of the solvent are mixed to dissolve; then the synergistic auxiliary and the remaining solvent are added, stirred and mixed evenly to obtain the water-lock releasing chemical agent for oil and gas reservoirs; preferably, a part of the solvent comprises 50-100% by the total weight of the solvent, and the remaining solvent comprises 0-50% by the total weight of the solvent.

9. Use of the water-lock releasing chemical agent for oil and gas reservoirs according to any of claims 1-7 in eliminating the water-lock damage in oil and gas reservoirs.

10. Use in eliminating the water-lock damage in oil and gas reservoirs according to claim 9, wherein based on the sum of the mass fractions of the anionic fluorosurfactant, the zwitterionic surfactant, and the synergistic auxiliary, when used, the water-lock releasing chemical agent for oil and gas reservoirs is diluted with water to a mass concentration of 0.001%-10%, preferably 0.01%-2%.

11. A compound represented by the following formula (I): 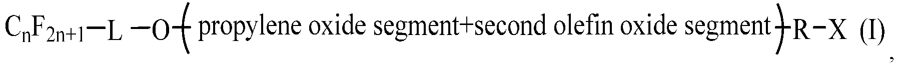 preferably 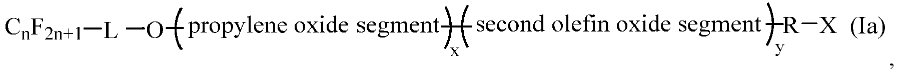 more preferably 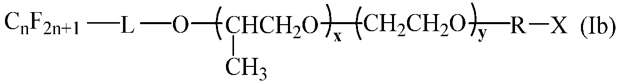 further preferably 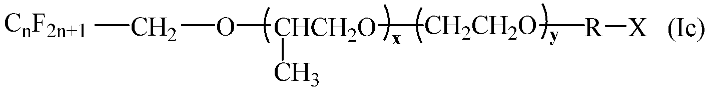
wherein, the second olefin oxide segment is selected from ethylene oxide, butylene oxide and styrene oxide;
the total number of propylene oxide units in the propylene oxide segment is any integer of 1-40, preferably 2-20, more preferably 4-20, e.g. 8-20;
the total number of second olefin oxide units in the second olefin oxide segment is any integer of 0-40, preferably 2-20, more preferably 4-20, e.g. 8-20;
L is a linking group, for example C₁₋₆ alkylene (e.g. -CH₂- and -CH₂CH₂-), -CO-, -NH-; preferably, L is - CH₂-;
R is at least one of C₁-C₂₀ alkylene and a substituted C₁-C₂₀ alkylene, preferably, R is at least one of C₁-C₆ alkylene and a substituted C₁-C₆ alkylene;
n is an integer of 1-20, preferably 4-12;
x is any integer of 0-40, preferably 2-20, for example 4-20, e.g. 8-20; preferably, x is not 0;
y is any integer of 0-40, preferably 2-20, for example 4-20, e.g. 8-20;
X is one of -COOM, -SO₃M, -OSO₃M, and -OPO₃M₂, wherein M is a charge-balancing cation, M is preferably an alkali metal cation, an alkaline earth metal cation or an ammonium cation, more preferablyNa⁺, K⁺ or NH₄⁺.

12. The compound according to claim 11, wherein the compound is selected from:
C₁₀F₂₁CH₂O(PO)₁₀(EO)₁₆C₃H₆COONa;
C₄F₉CH₂O(PO)₈(EO)₈C₂H₄SO₃Na;
C₆F₁₃CH₂O(PO)₄(EO)₁₀CH₂OPO₃Na₂;
and
C₁₂F₂₅CH₂O(PO)₁₂(EO)₁₈CH₂COONa.

13. Use of the compound according to claim 11 or 12 as anionic fluorosurfactant in eliminating the water-lock damage in oil and gas reservoirs.
